# EUROPEAN PATENT APPLICATION

(11) **EP 2 485 473 A1**
(43) Date of publication of application: **08.08.2012**
(21) Application number: 10820073.4
(22) Date of filing: 06.09.2010
(51) Int. Cl.: H04N 5/225, H04N 5/232, H04N 5/91

(54) **IMAGING DEVICE AND CONTROL METHOD FOR SAME, IMAGING SYSTEM AND NON-TRANSIENT COMPUTER-READABLE MEDIUM WITH STORED PROGRAM**

(30) Priority: 01.10.2009 JP 2009229779
(71) Applicant: NEC Corporation, Tokyo 108-8001 (JP)
(72) Inventor: INUTSUKA, Yusuke, Tokyo 108-8001 (JP)
(74) Representative: Vossius & Partner
(86) International application number: PCT/JP2010/005452
(87) International publication number: WO 2011/039947

(57) **Abstract**

The present invention aims to provide an imaging device that enables viewing an image exceeding an image of a range framed at the time of shooting after the shot has been taken, a control method thereof, an imaging system, and a program. An imaging device 10 according to the present invention is the imaging device 10 that includes a digital zoom function, and includes an image acquisition processing unit 21 that acquires image data of a predetermined range (image range A of an entire image sensor), an image process controlling unit 23 that holds information of a live view range B, which is smaller than the predetermined range, and an image display processing unit 24 that digitally zooms and displays a part corresponding to the live view range B from the acquired image data, and a data save processing unit 22 that provides the information of the live view range B held by the image process controlling unit 23 to the image data acquired by the image acquisition processing unit 21 and saves the image data.

## Description

### Technical Field

The present invention relates to an imaging device, a control method thereof, an imaging system, and a non-transitory computer readable medium storing a program, and particularly to an imaging device including a digital zoom function, a control method thereof, an imaging system, and a non-transitory computer readable medium storing a program.

### Background Art

Digital cameras including a zoom-in function that enlarges and displays a part of an image are in widespread use (for example, PTL 1). As the digital cameras are mounted to various apparatuses such as a mobile phone in recent years, users unfamiliar to photography can easily take photographs.

However, beginners unused to digital cameras take many failed photographs regarding framing. Further, even skilled people used to the digital cameras may shift the frame when shooting at an instant timing.

### Citation List

### Patent Literature

PTL 1: Japanese Unexamined Patent Application Publication No. 2008-079149

### Summary of Invention

### Technical Problem

Although the digital cameras of a related art can perform a zoom-in operation that enlarges and displays a part of an image when the captured image is viewed, a zoom-out operation to a wider angle direction than the field angle framed at the time of shooting is impossible as the image data exceeding the frame does not originally exist.

Therefore, for example when photographs taken during travel are viewed after returning from the travel, even in an attempt to view the scenery exceeding the frame of the captured image, it is impossible to zoom out or move the frame up, down, right and left to make a confirmation exceeding the frame.

The present invention is made in order to solve the abovementioned problem and aims to provide an imaging device that enables viewing an image exceeding an image of a range framed at the time of shooting after the shot has been taken, a control method thereof, an imaging system, and a non-transitory computer readable medium storing a program.

### Solution to Problem

An imaging device according to a first exemplary aspect of the present invention including a digital zoom function includes an image acquiring means that acquires image data of a predetermined range, an image process controlling means that holds information of a live view range, which is smaller than the predetermined range, an image displaying means that digitally zooms and displays a part corresponding to the live view range from the acquired image data, and a data saving means that, in response to a shooting instruction input to the image process controlling means, provides the information of the live view range held by the image process controlling means to the image data acquired by the image acquiring means and saves the image data.

Further, a control method of an imaging device according to a second exemplary embodiment of the present invention including a digital zoom function includes digitally zooming and displaying a part of a live view range, which is smaller than an image range of an entire image sensor, from the image range of the entire image sensor received by the image sensor, acquiring image data corresponding to the image range of the entire image sensor as a captured image, and providing information of the live view range to the acquired captured image and saving the captured image.

Furthermore, a non-transitory computer readable medium storing a program according to a third exemplary embodiment of the present invention causes a computer to execute a process to digitally zoom and display a part of a live view range, which is smaller than an image range of an entire image sensor, from the image range of the entire image sensor received by the image sensor, a process to acquire image data corresponding to the image range of the entire image sensor as a captured data, and a process to provide information of the live view range to the acquired captured image and save the captured image.

### Advantageous Effects of Invention

According to the present invention, an imaging device that enables viewing an image exceeding an image of a range framed at the time of shooting after the shot has been taken, a control method thereof, an imaging system, and a non-transitory computer readable medium storing a program.

### Brief Description of Drawings

Fig. 1 is a view showing an appearance of a mobile phone, which is an example of an imaging device mounted apparatus that is mounted with an imaging device according to a first exemplary embodiment;
Fig. 2 is a block diagram showing an overall configuration of the imaging device according to the first exemplary embodiment;
Fig. 3 is a view for explaining a live view range held by an image process controlling unit according to the first exemplary embodiment for a live view display operation;
Fig. 4 is a flowchart showing an operation at the time of shooting by the imaging device according to the first exemplary embodiment; and
Fig. 5 is a flowchart showing an operation at the time of viewing a captured image by the imaging device according to the first exemplary embodiment.

### Description of Embodiments

### [First exemplary embodiment]

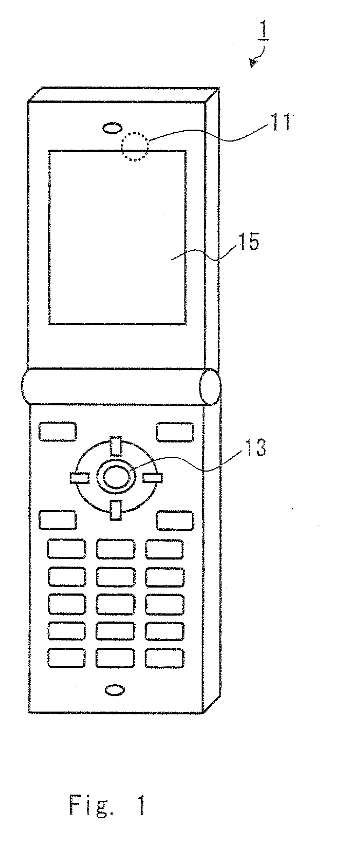

First, an imaging device mounted apparatus according to this exemplary embodiment is explained using Fig. 1. Fig. 1 is a view showing an appearance of a mobile phone, which is an example of the imaging device mounted apparatus mounted with an imaging device according to the first exemplary embodiment.

A mobile phone 1 according to this exemplary embodiment is a general foldable mobile phone 1, for example, as shown in Fig. 1. An upper housing of the mobile phone 1 is equipped with a display unit 15 such as a liquid crystal display and a lower housing is equipped with a key operation unit 13 including a plurality of various operation buttons such as a numeric keypad and function keys. Further, this mobile phone 1 includes the imaging device, which is a digital camera, a back surface side of the upper housing is equipped with a camera unit 11 including a lens and the like, and inside the lower housing is equipped with a control device and so on for realizing an imaging function.

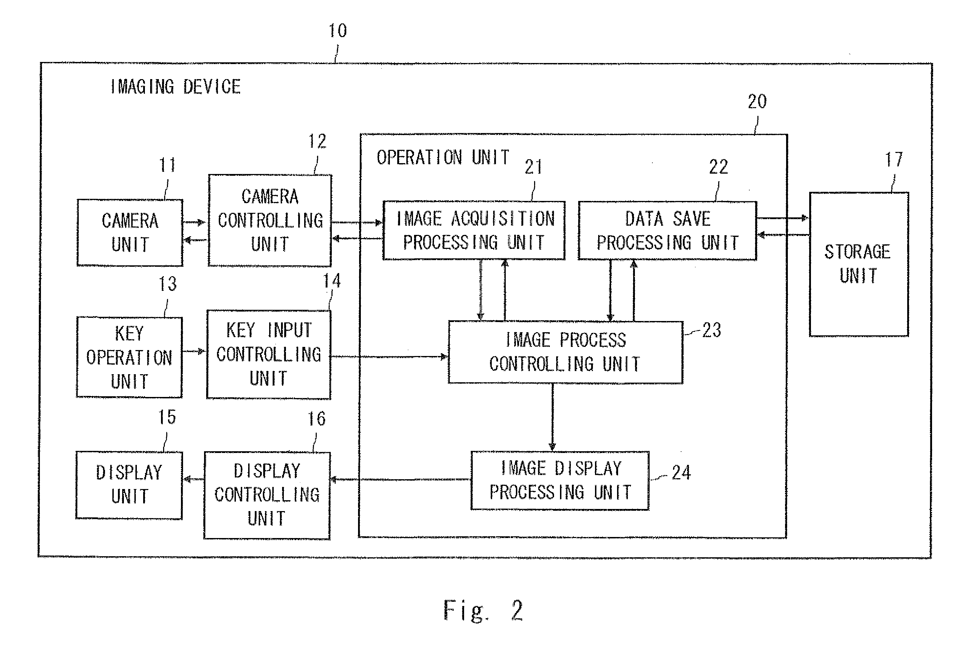

Next, a configuration of the part of the imaging device is explained using Fig. 2. Fig. 2 is a block diagram showing an overall configuration of the imaging device according to the first exemplary embodiment. As shown in Fig. 2, the imaging device 10 according to this exemplary embodiment includes the camera unit 11, a camera controlling unit 12, the key operation unit 13, a key input controlling unit 14, the display unit 15, a display controlling unit 16, a storage unit 17, and an operation unit 20.

The camera unit 11 is a device that retrieves an image of an imaging range as image data, which is electronic data. For example, the camera unit 11 is preferably a short-focus camera mounted with a wide-angle lens. The camera unit 11 projects light received by a lens on an image sensor as an image and acquires the image as the image data. The camera controlling unit 12 controls the operation of the camera unit 11 and controls acquisition of the image data from the camera unit 11.

The key operation unit 13 is a keyboard that receives a key input from a user. The key operation unit 13 is an operation unit of the mobile phone 1 and includes a plurality of operation buttons. The key operation unit 13 converts button press into an electrical signal. The key input controlling unit 14 acquires the signal received from the key operation unit 13. That is, the key input controlling unit 14 detects an input to the key operation unit 13. Then, the key input controlling unit 14 makes the detected signal be information available to the operation unit 20.

The display unit 15 is a display device such as a liquid crystal display and an organic EL (electroluminescence) display. The display unit 15 displays the image data and the like received by the electric signal. The display controlling unit 16 controls the display unit 15. For example, the display controlling unit 16 performs control to display a preview image and an actually captured image acquired by the camera unit 11 on the display unit 15.

The storage unit 17 saves data of the captured image and the like.

The operation unit 20 is a control device such as an operation circuit that is connected to the camera controlling unit 12, the key input controlling unit 14, the display controlling unit 16, and the storage unit 17 and controls the operation of the imaging device 10. Embedding a predetermined program builds an image acquisition processing unit 21, a data save processing unit 22, an image process controlling unit 23, and an image display processing unit 24 in this operation unit 20.

The image acquisition processing unit (image acquisition means) 21 controls the operation of the camera controlling unit 12 and acquires the image data of the predetermined range from the camera unit 11. The data save processing unit (data save processing means) 22 writes data to and reads data from the storage unit 17. The image display processing unit (image displaying means) 24 controls the operation of the display controlling unit 16 and displays the image and a user interface on the display unit 15.

The image process controlling unit (image process controlling means) 23 administers the control operation of this entire imaging device 10 in accordance with the user operation received from the key input controlling unit 14, acquires the image concerning the camera operation, displays the image, and controls the image data saving.

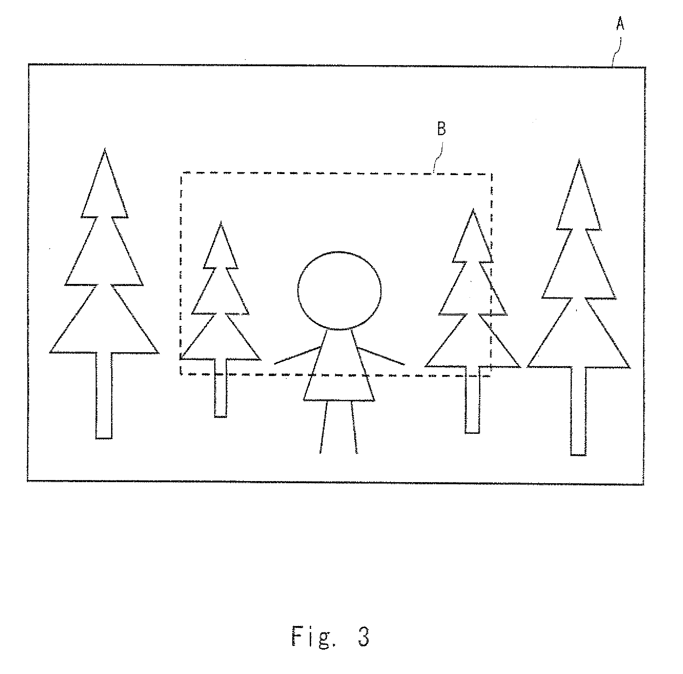

Further, the image process controlling unit 23 holds information of a live view range B for an image range A of the entire image sensor of the camera unit 11. The live view range B is explained using Fig. 3 here. Fig. 3 is a view for explaining the live view range held by the image process controlling unit 23 according to the first exemplary embodiment for a live view display operation described later.

As shown in Fig. 3, the live view range B is a range smaller than the image range A of the entire image sensor received by the image sensor of the camera unit 11. Both of the image range A of the entire image sensor and the live view range B can be rectangular, for example. The information of the live view range B is held as coordinate information for the image range A of the entire image sensor, for example. The size of this live view range B can be changed within a predetermined range in accordance with the user operation received from the key input controlling unit 14.

The image process controlling unit 23 here controls the image acquisition processing unit 21 at the time of live view display that immediately displays the image on the display unit 15 to retrieve the image data corresponding to the image range A of the entire image sensor of the camera unit 11 and cut out the part corresponding to the live view range B being held from the image range A of the entire retrieved image sensor. Then, the image processing controlling unit 23 performs image display by enlarging and reducing the image corresponding to the cut-out live view range B to the size inscribed in the screen of the display unit 15 and displayable, and controlling the image display processing unit 24 to display it on the display unit 15.

At the time of shooting, the image processing controlling unit 23 controls the image acquisition processing unit 21 to acquire the image data corresponding to the image range A of the entire image sensor of the camera unit 11. Further, at the time of saving, the image process controlling unit 23 controls the data save processing unit 22 to provide the coordinate information of the live view range B to the image data of the image range A of the entire acquired image sensor and save the image data.

Furthermore, at the time of viewing the saved image data, the image processing controlling unit 23 controls the data save processing unit 22 to acquire the image data selected from the storage unit 17. Then, the image processing controlling unit 23 cuts out the part corresponding to the live view range B from the acquired image data, enlarges and reduces it to the size inscribed in the screen of the display unit 15 and displayable, and controls the image display processing unit 24 to display it on the display unit 15.

As described above, the imaging device 10 according to this exemplary embodiment is the imaging device 10 including a digital zoom function, and includes the image acquisition means (the image acquisition processing unit 21) that acquires the image data of the predetermined range (the image range A of the entire image sensor), the image process controlling means (the image process controlling unit 23) that holds the information of the live view range B, the image displaying means (the image display processing unit 24) that digitally zooms and displays the part corresponding to the live view range B from the acquired image data, and the data saving means (the data save processing unit 22) that, in response to a shooting instruction input to the image process controlling means, provides the information of the live view range B held by the image process controlling means to the image data acquired by the image acquisition means and saves the image data.

Next, an operation of the imaging device 10 configured as above is explained.

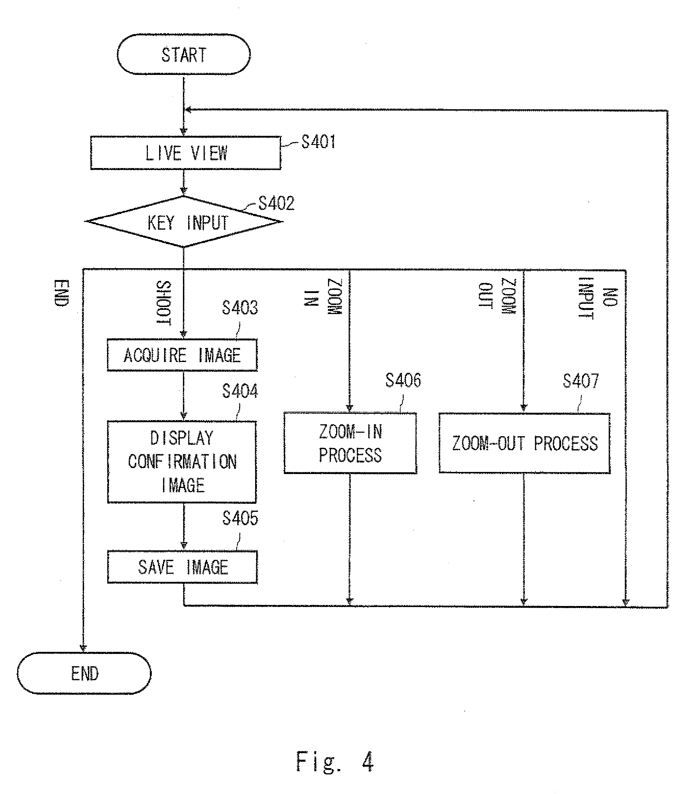

First, the operation at the time of shooting by the imaging device 10 is explained using Fig. 4. Fig. 4 is a flowchart showing the operation at the time of shooting by the imaging device according to the first exemplary embodiment. The flowchart shown in Fig. 4 shows the process content executed at the time of shooting mode, and all the operation control is executed according to an operation program previously stored to the operation unit 20.

As shown in Fig. 4, the imaging device 10 performs the live view display on the display unit 15 when the shooting mode starts (step S401). The live view here indicates a preview state that immediately displays the acquired data on the display unit 15. At this time, in this exemplary embodiment, firstly the image processing controlling unit 23 controls the image acquisition processing unit 21 to retrieve the image data corresponding to the image range A of the entire image sensor of the camera unit 11 and cut out the part corresponding to the live view range B being held from the image range A of the entire retrieved image sensor. The image processing controlling unit 23 enlarges and reduces the image corresponding to the cut-out live view range B to the size inscribed in the screen of the display unit 15 and displayable, and controls the image display processing unit 24 to display it on the display unit 15.

As described so far, digital zoom is performed according to the live view range B information being held from the image range A of the entire retrieved image sensor to generate a live view image. Note that initial values of the live view range B at the time of starting the flowchart shall be a shape slightly smaller than the image range A of the entire image sensor.

Next, the key input from the user is received (step S402). This key input separates the subsequent processes. Note that when there is no key input in this step S402, the process returns to the step S401 and the live view display is continued.

When the key input from the user is "shoot" in the step S402, the process moves to the shooting operation. In this shooting operation, firstly the image process controlling unit 23 controls the image acquisition processing unit 21 to acquire the image data corresponding to the image range A of the entire image sensor of the camera unit 11 and acquire the image (step S403).

Next, a confirmation image is displayed (step S404). In this step, the image process controlling unit 23 cuts out the part of the live view range B from the image acquired in the step S403, enlarges and reduces it to the size inscribed in the screen of the display unit 15 and displayable, and controls the image display processing unit 24 to display it on the display unit 15.

Next, the acquired image is saved (step S405). At this time, the image processing controlling unit 23 provides the coordinate information of the live view range B to the image data corresponding to the image range A of the entire image sensor, and controls the data save processing unit 22 to save the image data to the storage unit 17. Then, the process returns to the step S401 and the live view display is performed.

On the other hand, when the key input from the user is "zoom in", a zoom-in process is performed (step S406). Specifically, the image processing controlling unit 23 changes the coordinates of the live view range B being held to slightly smaller ones. However, the live view range B is limited not to be smaller than a certain size. Then, the process returns to the step S401 and the live view display is performed for the changed live view range B.

Moreover, when the key input from the user is "zoom out" in the step S402, a zoom-out process is performed (step S407). Specifically, the image processing controlling unit 23 changes the coordinates of the live view range B being held to slightly larger ones. However, the live view range B is limited not to be larger than a certain size. After that, the process returns to the step S401 and the live view display is performed for the changed live view range B.

Note that when the key input from the user is "end" in the step S402, the live view display itself ends and the shooting mode ends.

As described so far, in this exemplary embodiment, unlike the digital cameras of the related art, when the shot has been executed, the image range A of the entire image sensor is saved as the captured image instead of the live view range B, and the coordinate information of the live view range B is provided to the saved image. Although described later for details, in the image captured in this way, it is possible to view the image exceeding the image of the range framed at the time of shooting after the shot has been taken.

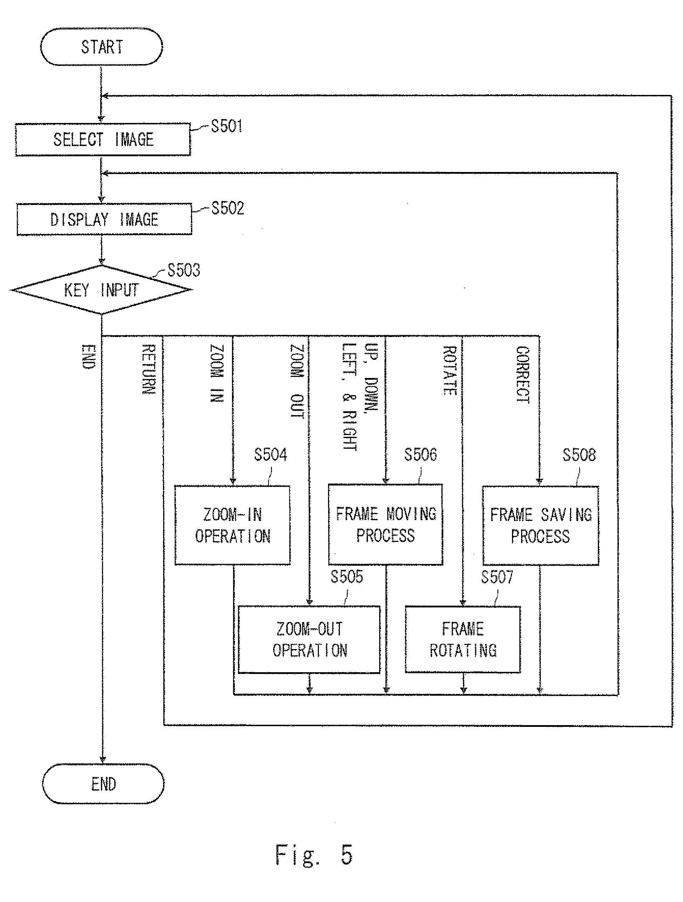

Next, an operation at the time of viewing the captured image taken in the above way is explained using Fig. 5. Fig. 5 is a flowchart showing the operation at the time of viewing the captured image by the imaging device according to the first exemplary embodiment. The flowchart shown in Fig. 5 shows the process content executed at the time of play mode, and all the operation control is executed according to the operation program previously stored to the operation unit 20.

As shown in Fig. 5, when the play mode starts, in the imaging device 10, the image process controlling unit 23 controls the data save processing unit 22 to acquire a list of saved images from the storage unit 17. Then, the image process controlling unit 23 requests the user to select the image by controlling the image display processing unit 24 to display the acquired list of images on the display unit 15 and receives the image selection by the user from the key operation unit 13.

When the user selects the image (step S501), the image process controlling unit 23 controls the data save processing unit 22 to acquire the image data of the selected image from the storage unit 17. Further, the image processing controlling unit 23 reads and holds the information of the coordinate information of the live view range B provided to this image data.

Next, the selected image is displayed (step S502). At this time, in this exemplary embodiment, the image processing controlling unit 23 cuts out the part corresponding to the live view range B provided to this image from the image data acquired in the previous step S501, enlarges and reduces it to the size inscribed in the screen of the display unit 15 and displayable, and controls the image display processing unit 24 to display it on the display unit 15.

Next, the key input from the user is received (step S503). This key input separates the subsequent processes. When the key input is "return" in this step S503, the process returns to the image selection of the step S501.

When the key input from the user is "zoom in" in the step S503, the zoom-in process is performed (step S504). Specifically, the image processing controlling unit 23 changes the coordinates of the live view range B being held to slightly smaller ones. However, the live view range B is limited not to be smaller than a certain size. Then, the process returns to the step S502 and the image display is performed for the changed live view range B.

When the key input from the user is "zoom out" in the step S503, the zoom-out process is performed (step S505). Specifically, the image processing controlling unit 23 changes the coordinates of the live view range B being held to slightly larger ones. However, the live view range B is limited not to be larger than the certain size and further not to exceed the image range of the entire image (image range A of the entire image sensor). Then, the process returns to the step S502 and then the image display is performed for the changed live view range B.

On the other hand, when the key input from the user is "up" "drown" "left" "light", a frame moving process is performed (step S506). Specifically, the image processing controlling unit 23 translates the coordinates of the live view range B being held to up, down, left, and right according to the key direction. However, the live view range B is limited not to exceed the image range of the entire image (the image range A of the entire image sensor).

When the key input from the user is "rotate" (two keys of right rotation and left rotation) in the step S503, a frame rotating process is performed (step S507). Specifically, the image processing controlling unit 23 rotates the live view range B being held right and left according to the key direction. However, the live view range B is limited not to exceed the image range of the entire image (the image range A of the entire image sensor).

Moreover, when the key input from the user is "correct" in the step S503, a frame saving process is performed (step S508). Specifically, the image processing controlling unit 23 provides the live view range B being held at that time to the image data and controls the data storage processing unit 22 to save the image data to the storage unit 17. That is, the image data remains as it is, only the information of the live view range B is corrected, and the data is overwritten and saved.

Note that when the key input from the user is "and" in the step S503, the display of the selected image itself ends and the play mode ends.

As described above, in this exemplary embodiment, immediately after the image viewing starts, the image of the part corresponding to the live view range B from the captured image data is enlarged or reduced to fit the screen size of the display unit 15 and displayed. That is, it is played with the frame intended by the user at the time of shooting. Then, when the user performs the zoom-in operation, the image is enlarged in a similar manner as the digital cameras of the related art, however when the zoom-out operation is performed, a viewing field angle can be changed in the range up to the image range A of the entire image sensor. That is, this exemplary embodiment enables the zoom-out operation at the time of viewing the image data after the shot has been taken to the wider angle direction than the field angle confirmed through the viewfinder at the time of shooting. Moreover, when the user performs the frame moving operation such as rotation and translation, the viewing position can be changed in the range up to the image range A of the entire image sensor. Therefore, the image exceeding the image of the range framed at the time of shooting can be viewed after the shot has been taken.

Additionally, as the information of the live view range B can be corrected at the time of viewing, it is possible to perform correction such as enlarging, reducing, rotating, and translating the field angle framed by the user at the time of shooting even after the shot has been taken. That is, the framing can be corrected after the shot has been taken. This creates exemplary advantages such that the user not used to photography can take time to correct failures of the framing made at the time of shooting after the shot has been taken.

Note that as the digital cameras in recent years have higher pixel resolution, and the image quality can be sufficiently maintained even when the correction of zoom in/out is performed in the frame correction after the shot has been taken.

As described above, the control method of the imaging device 10 according to this exemplary embodiment includes digitally zooming and displaying the part of the live view range B from the image range A of the entire image sensor received by the image sensor, acquiring the image data corresponding to the image range A of the entire image sensor as the captured image, and providing the information of the live view range B to the acquired captured image and saving the captured image.

Further, the program according to this exemplary embodiment is to cause the imaging device 10 including the digital zoom function to execute the process to digitally zoom and display the part of the live view range B from the image range A of the entire image sensor received by the image sensor, the process to acquire the image data corresponding to the image range A of the entire image sensor as the captured image, and the process to provide the information of the live view range B to the acquired image and save the captured image.

As described above, in this exemplary embodiment, when the shot has been executed, the image range A of the entire image sensor is saved as the captured image instead of the live view range B, and the coordinate information of the live view range B is provided to this image. This enables viewing the image exceeding the image of the range framed at the time of shooting after the shot has been taken. Moreover, correcting the provided information of the live view range B in the enlarging direction or the outward direction enables correction into the frame including the image exceeding the image of the range framed at the time of shooting.

Note that although the image range A of the entire image sensor and the live view range B are explained to be both rectangular, they may be other shapes than the rectangular. In addition, the image range A of the entire image sensor and the live view range B may be different shapes from each other.

### [Second exemplary embodiment]

Although the first exemplary embodiment explained the case of assuming that the camera unit 11 is the short-focus camera mounted with the wide-angle lens, this exemplary embodiment explains the case in which an optical lens is mounted to the camera unit 11 instead of the wide angle lens. That is, the case is explained in which the present invention is applied to the imaging device 10 further including an optical zoom function in addition to the digital zoom function. Other configurations are similar to the first exemplary embodiment, thus the explanation is omitted.

The operation of the imaging device 10 according to this exemplary embodiment is different from the first exemplary embodiment only in the operation of the step S406 and the step S407 shown in Fig. 4, and other operations are similar to the first exemplary embodiment.

In this exemplary embodiment, in the zoom-in process of the step S406, when the optical zoom is possible, the image process controlling unit 23 performs the zoom operation by the optical zoom while fixing the position of the live view range B for the image range A of the entire image sensor. That is, firstly the field angle of the image range A of the entire image sensor itself is made small by the optical zoom. Then, when the optical zoom becomes the maximum value and further optical zoom cannot be performed, it is switched to the digital zoom similar to the first exemplary embodiment.

On the other hand, in the zoom-out process of the step S407, the image processing controlling unit 23 performs the similar zoom-out process as the first exemplary embodiment in the state of digitally zoomed. When the live view range reaches a certain maximum size (a predetermined size slightly smaller than the image range A of the entire image sensor), the zoom-out process is performed by the optical zoom while fixing the position of the live view range B for the image range A of the entire image sensor. That is, the field angle of the image range A of the entire image sensor itself is increased by the optical zoom.

Then, in a similar manner as the first exemplary embodiment, the image exceeding the image of the range framed at the time of shooting can be viewed after the shot has been taken by the imaging device 10 that includes the digital zoom function and the optical zoom function.

### [Other exemplary embodiments]

Note that the present invention is not limited to the above exemplary embodiments and can be modified as appropriate without departing from the scope. For example, although the above exemplary embodiments illustrated the case of the digital camera in which the imaging device 10 according to the present invention is mounted to the mobile phone 1, it may be mounted to other electronic apparatuses including a smartphone, PDA (Personal Digital Assistance), and may be a digital camera itself.

Additionally, the display unit 15 may be a touch-sensitive display unit 15*.* The touch-sensitive display unit 15 allows the shooting operation and viewing operation of the captured image to be more intuitive operations than the key input using the key operation unit 13. This creates an exemplary advantage that the operations are user-friendly.

Although the first exemplary embodiment explained only the case of viewing the captured image taken by the imaging device 10 by operating the imaging device 10, it can be performed by operating other electronic apparatuses such as PC (Personal Computer). That is, an imaging system may be built that includes the imaging device 10 and another electronic apparatus that digitally zooms and displays the part corresponding to the information of the live view range B from the image data saved to this imaging device 10. As described above, when another electronic apparatus is used to perform viewing, by using a viewing software and the like that has a similar image viewing function as the operation shown in the flowchart of Fig. 5, an exemplary advantage is created that the same viewing method can be provided to the user. Further, the information of the live view range B provided to the image data can be corrected by this electronic apparatus.

Furthermore, at the time of printing the captured image taken by the imaging device 10 at home or in a store, an apparatus for printing may read the information of the live view range B provided to the image data and print only the part corresponding to the live view range B. That is, an imaging system may be built that includes the imaging device 10 and a printing apparatus that digitally zooms and prints the part corresponding to the information of the live view range B from the image data saved to this imaging device 10. Then, when the information of the live view range B is corrected and the framing is corrected at the time of viewing, there is an exemplary advantage that it is possible to perform imagewise printing to the framing correction result. Note that when the framing is not corrected, it is possible to perform imagewise printing with the framing intended at the time of shooting.

Although in the above exemplary embodiments, the present invention is explained as a hardware configuration, the present invention is not limited to this. The present invention can also be realized by causing CPU (Central Processing Unit) to execute arbitrary processes.

Moreover, the abovementioned program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM (Read Only Memory), CD-R, CD-R/W, and semiconductor memories (such as mask ROM, PROM (Programmable ROM), EPROM (Erasable PROM), flash ROM, RAM (Random Access Memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

Although he present invention is explained with reference to the exemplary embodiments so far, the present invention is not limited by the above. Various modifications that can be understood by a person skilled in the art can be made to the configuration and details of the present invention within the scope of the invention.

The present application claims priority rights of and is based on Japanese Patent Application No. 2009-229779 filed on October 1, 2009 in the Japanese Patent Office, the entire contents of which are hereby incorporated by reference.

### Preference Signs List

- 1: MOBILE PHONE
- 10: IMAGING DEVICE
- 11: CAMERA UNIT
- 12: CAMERA CONTROLLING UNIT
- 13: KEY OPERATION UNIT
- 14: KEY INPUT CONTROLLING UNIT
- 15: DISPLAY UNIT
- 16: DISPLAY CONTROLLING UNIT
- 17: STORAGE UNIT
- 20: OPERATION UNIT
- 21: IMAGE ACQUISITION PROCESSING UNIT
- 22: DATA STORAGE PROCESSING UNIT
- 23: IMAGE PROCESS CONTROLLING UNIT
- 24: IMAGE DISPLAY PROCESSING UNIT
- A: IMAGE RANGE OF ENTIRE IMAGE SENSOR
- B: LIVE VIEW RANGE

## Claims

1. An imaging device including a digital zoom function comprising:
an image acquiring means that acquires image data of a predetermined range;
an image process controlling means that holds information of a live view range, the live view range being smaller than the predetermined range;
an image displaying means that digitally zooms and displays a part corresponding to the live view range from the acquired image data; and
a data saving means that, in response to a shooting instruction input to the image process controlling means, provides the information of the live view range held by the image process controlling means to the image data acquired by the image acquiring means and saves the image data.

2. The imaging device according to Claim 1 ;
wherein the predetermined range is an image range of an entire image sensor received by the image sensor.

3. The imaging device according to Claim 1 or 2,
wherein the information of the live view range held by the image process controlling means can be changed.

4. The imaging device according to one of Claims 1 to 3, wherein
the data saving means reads out the saved image data together with the provided information of the live view range, and
the image displaying means digitally zooms and displays the part corresponding to the read live view range from the read image data.

5. The imaging device according to Claim 4,
wherein the information of the live view range provided to the image data can be corrected.

6. The imaging device according to Claim 5,
wherein the live view range can be corrected to an enlarging direction and an outward direction.

7. An imaging system comprising:
the imaging device according to one of Claims 1 to 3; and
another electronic apparatus that digitally zooms and displays the part corresponding to the information of the live view range provided to the image data from the image data saved using the imaging device.

8. The imaging system according to Claim 7,
wherein the information of the live view range provided to the image data can be corrected by the another electronic apparatus.

9. An imaging system comprising:
the imaging device according to one of Claims 1 to 6; and
a printing apparatus that digitally zooms and prints the part corresponding to the information of the live view range provided to the image data from the image data saved using the imaging device.

10. A control method of an imaging device including a digital zoom function, the control method comprising:
digitally zooming and displaying a part of a live view range from an image range of an entire image sensor received by the image sensor, the live view range being smaller than the image range of the entire image sensor;
acquiring image data corresponding to the image range of the entire image sensor as a captured image; and
providing information of the live view range to the acquired captured image and saving the captured image.

11. The control method of the imaging device according to Claim 10, wherein the live view range can be changed before the captured image is acquired.

12. The control method of the imaging device according to Claim 10 or 11, further comprising:
reading out the saved captured image together with the information of the provided live view range; and
digitally zooming and displaying a part corresponding to the read live view range from the read captured image.

13. The control method of the imaging device according to Claim 12, wherein the information of the live view range provided to the image data can be corrected.

14. A non-transitory computer readable medium storing a program that causes a computer to execute:
a process to digitally zoom and display a part of a live view range from an image range of an entire image sensor received by the image sensor, the live view range being smaller than the image range of the entire image sensor;
a process to acquire image data corresponding to the image range of the entire image sensor as a captured data; and
a process to provide information of the live view range to the acquired captured image and save the captured image.
